# EUROPÄISCHE PATENTSCHRIFT

(11) **EP 2 836 393 B1**
(45) Veröffentlichungstag und Bekanntmachung des Hinweises auf die Patenterteilung: **26.12.2018**
(21) Anmeldenummer: 13715245.0
(22) Anmeldetag: 12.04.2013
(51) Int. Cl.: B60N 2/42, B60N 2/24, B60N 2/16

(54) **MINENSICHERE SITZEINRICHTUNG**
MINEPROOF SEAT DEVICE
SYSTÈME DE SIÈGE AVEC SÉCURITÉ CONTRE LES MINES

(30) Priorität: 13.04.2012 DE 102012007279
(43) Veröffentlichungstag der Anmeldung: 18.02.2015
(73) Patentinhaber: Rheinmetall MAN Military Vehicles GmbH, 80995 München (DE)
(72) Erfinder: SCHAARE, Stephan, 45239 Essen (DE); BÜCHLING, Björn, 34225 Baunatal (DE)
(74) Vertreter: Horn Kleimann Waitzhofer Patentanwälte PartG mbB
(86) Internationale Anmeldenummer: PCT/EP2013/057689
(87) Internationale Veröffentlichungsnummer: WO 2013/153201

(56) Entgegenhaltungen:
- WO-A2-2006/022880
- FR-A1- 2 510 512
- US-A- 4 003 534

## Beschreibung

Die Erfindung beschäftigt sich mit einer verbesserten Sitzeinrichtung, die die Belastung einer Person insbesondere während einer Ansprengsituation herabsetzt.

Die EP 1 293 378 B1 befasst sich mit einer Sitzeinrichtung in einem minengeschützten Kampffahrzeug. Die minensichere Sitzeinrichtung umfasst eine Rohrekonstruktion zur Anbindung an ein Fahrzeugdach. Die Rohrkonstruktion besitzt zwei zueinander parallel und schräg aufwärts zur Bodenebene der Fahrzeugwanne verlaufende Führungsrohre, deren obere Enden im oberen Beriech der Vorderwand befestigt sind und deren untere Enden über Verbindungsrohre an der Dachplatte aufgehängt sind.

Aus der DE 10 2008 063 804 A1 ist ein System zur minensicheren Integration von handelsüblichen Sitzeinrichtungen bekannt, das aus einem Tragwerk besteht, dass an einem Dach befestigbar ist. Die Dachbefestigung wird entsprechend der zu erwartenden Minenbelastung starr, mittels Gurte oder über Crashelemente realisiert. Das Tragwerk ist über Gurte unten an einem Boden befestigt.

Eine minensichere Sitzeinrichtung beschreibt auch die DE 20 2011 105 911 U1. Diese umfasst ein Sitztragwerk zur Aufnahme eines Sitzes, wobei das Sitztragwerk an einem Fahrzeugdach befestigbar ist.

Eine Sitzeinrichtung mit einem Fahrzeugsitz offenbart die DE 10 2009 004 923 A1. Um zu erreichen, dass beim Auftreten großer Beschleunigungskräfte diese zumindest teilweise absorbiert werden, wird vorgeschlagen, in einen die Sitzkonsole haltenden Konsolenträger ein Energie verzerrendes Element einzubinden. Dabei wird das die Energie verzerrende Element von einer Ruheposition in eine andere Position ausgefahren, sodass sich die Sitzhöhe zum Fahrzeugdach hin durch Abstandsvergrößerung ändert.

Die DE 37 34 707 C2 benennt einen Fahrersitz, der ohne zusätzliche Bauteile und ohne zusätzliche Bearbeitungsmaßnahmen durch einfaches Ummontieren von an der Sitzkonstruktion bereits vorhandenen Bauteilen ganz nach Bedarf für eine Links- oder Rechtsmontage hergerichtet werden kann. Hierbei ist in senkrechten Führungsschienen eine vertikale Arretiervorrichtung (Rastschienen) mit einem Rastbolzen vorgesehen, der mittels eines Hebels in einem Führungsrohr gegen den Druck einer Feder verlagerbar ist und in seiner Arretierstellung in eine der Rastöffnungen sperrend eingreift.

Aus der US 4,003,534 A ist eine den Oberbegriff bildende minensichere Sitzeinrichtung bekannt, die bei Hubschraubersitzen Anwendung findet. Weitere minensichere Sitzeinrichtungen offenbaren die WO 2006/022880 A2 sowie FR 2 510 512 A1.

Die Erfindung stellt sich die Aufgabe, die Impulsübertragung vom Dach über die Sitzeinrichtung und den Sitz an den Insassen zu reduzieren.

Gelöst wird die Aufgabe durch die Merkmale des Patentanspruchs 1. Vorteilhafte Ausgestaltungen sind in den Unteransprüchen aufgezeigt.

Der Erfindung liegt die Idee zugrunde, die Idee aus der DE 10 2009 004 923 A1 aufzugreifen und den Abstand eines Sitzes zur Dachkonstruktion eines Fahrzeuges zu verlängern, um so die Belastungseinwirkung auf einen Insassen bei einer Minenansprengung etc. gering zu halten oder gar zu vermeiden. Die Umsetzung der Idee erfolgt derart, dass der Sitz durch eine Raste so gelagert wird, dass dieser Sitz im Ansprengungsfall mit der Dachbewegung nach unten verfährt, jedoch bei anschließender Dachbewegung nach oben (Wegumkehrung) durch die Raste ein definierter Weg nach unten freigegeben wird - im Rahmen der Anzahl der Einkerbungen und des Rastweges. Eine Freigabe dieser Art wirkt sich positiv auf den Insassen aus, da der Weg verlängert wird. Durch die integrierten Rasten im Sitz ist eine Dämpfungswirkung im Fall einer Ansprengung garantiert. Behoben wird damit das Problem des Einbaus eines, in der Regel zusätzlichen, Deformationselementes in das Sitzgestell, wofür sonst Bauraum benötigt wird. Es wird kein Bauraum für ein derartiges Element, wie beispielsweis in der DE 10 2009 004 923 A1 benötigt. Auch alle anderen Funktionen wie Höhenverstellung usw. werden garantiert und sind von sich aus gegeben.

Die minensichere Sitzeinrichtung ist mittels Rohren an ein Fahrzeugdach oder an einen Fahrzeugboden anbringbar. Über die Rohre ist jeweils ein weiteres Rohr als Sitzschlitten gestülpt. Der Sitzschlitten verfügt auf seiner Rohraußenseite über Einkerbungen für eine Raste. Über jedes weitere Rohr ist ein drittes Rohr übergestülpt, an dem der eigentliche Sitz befestigt ist und an dem die Raste eingebunden ist. Diese ist ihrerseits vorgespannt, sodass mit dem Erreichen einer die Vorspannung aufhebenden Kraft (durch die Wegumkehr bei einer Ansprengung) die Raste entlang der Einkerbungen des Sitzschlittens weiter nach unten rutscht und dadurch einen weiteren Weg frei gibt. Der Sitz kann nicht nur in seiner Höhe verstellt werden, sondern ist auch in vertikaler Richtung verschiebbar. Auch herkömmliche Sitze können eingesetzt werden, wie in der DE 10 2008 063 804 A1 angedacht.

Diese Idee erlaubt zudem eine Anbindung des Sitzes am Fahrzeugdach als auch am Fahrzeugboden bzw. an einem Fahrzeugzwischenboden etc. Eine derartige Anbindung am Fahrzeugboden wird dann durch die Umkehrung des Rastprinzips realisiert.

Anhand eines Ausführungsbeispiels mit Zeichnung soll die Erfindung näher erläutert werden. Es zeigt:
- Fig. 1: eine Sitzeinrichtung mit einer Anbindung an ein Fahrzeugdach,
- Fig. 2: eine Darstellung der Änderung bezogen auf die Sitzeinrichtung in Fig. 1.

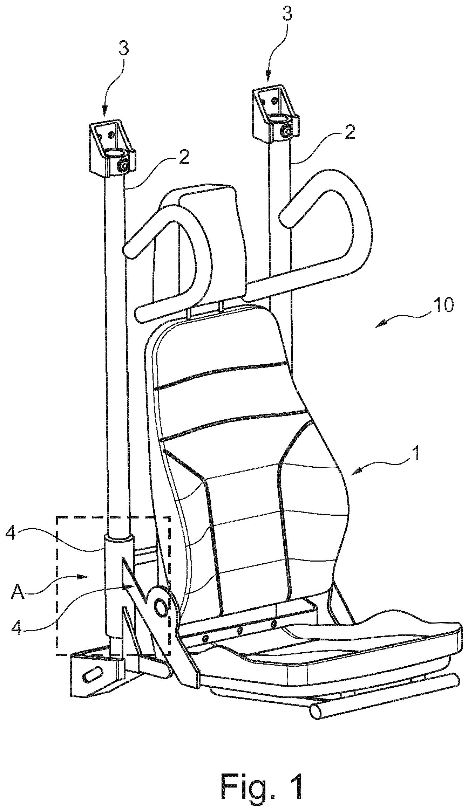

In Fig. 1 ist eine Sitzeinrichtung 10 (nach dem Stand der Technik) mit einem Sitz 1 dargestellt, die über zwei Rohre 2 mit einem Fahrzeugdach 3 verbunden ist. Über die Rohre 2 ist jeweils ein weiteres Rohr 4 gestülpt, der Sitzschlitten, der die Sitzhöhenverstellung über einen Arretierbolzen 5 garantiert. Der Sitzschlitten 4 ist auf wenigstens zwei Federn 6 gelagert, sodass beim Ziehen des Arretierbolzens 5 keine Kraft zur Höhenverstellung aufgewendet werden muss und der Sitz 1 auch nicht auf eine untere Halterung aufschlägt.

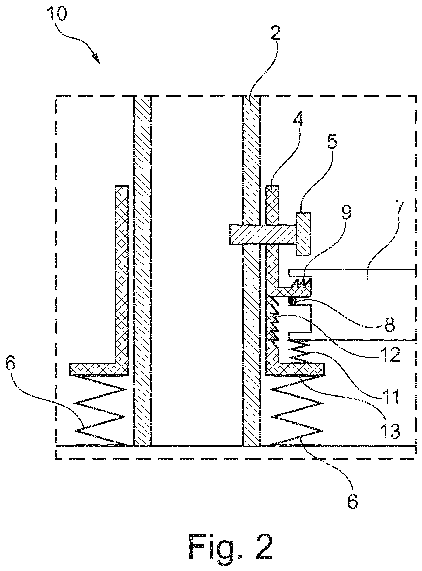

Auf der Rohraußenseite verfügt der Sitzschlitten 4 über Einkerbungen 12 für eine Raste 8. Über jedes weitere Rohr 4 ist nunmehr ein drittes Rohr 7 übergestülpt (Fig. 2), an dem nunmehr der Sitz 1 befestigt ist (nicht mehr am Sitzschlitten 4, wie In Fig. 1). Dieses Rohr 7 umfasst die Raste 8, die vorgespannt ist. Die Vorspannung kann über eine Feder 9 etc. erfolgen. Dabei sollte die Vorspannung bzw. die Federspannung so groß gewählt werden, dass bei der statischen Last eines Insassen die Raste 8 nicht anspringt und auch bei einer fahrdynamischen Last die Raste 8 nicht ausgelöst wird. Nach unten hin sollte das dritte Rohr 7 mit einer weiteren Feder 11 etc. abgestützt werden.

Die Funktionsweise ist wie folgt:
Bei einem Minenvorfall bzw. einer Ansprengung wird die gesamte Sitzeinrichtung 10 durch die Anbindung am Dach 3 mit einer Dachdurchbiegung nach unten gedrückt. Der Insasse (nicht näher dargestellt) bleibt durch seine Massenträgheit und die Wirkzeit (einige Millisekunden) stehen. Danach biegt sich das Dach 3 nach oben durch. Es findet eine Wegumkehrung statt. Der Sitz 1 würde nunmehr einen hohen Impuls auf den Insassen ausüben, der nicht gedämpft ist. Durch das Rasteprinzip wird mit der erreichten Kraft die Feder 9 entspannt, d.h., die durch die Wegumkehr erreichte Kraft reicht aus, um die Feder 9 zu entspannen. Die Raste 8 rutscht nun ihrerseits über die Einkerbungen 12 des Sitzschlittens 4 etappenweise - also zeitlich jeweils leicht verzögert - weiter nach unten. Dabei bzw. dadurch wird mehr Weg freigegeben, die Wirbelsäule des Insassen weniger belastet, die Belastung also reduziert. Begrenzt wird dieser Weg jedoch durch den Bereich, in dem die Einkerbungen 12 eingebunden sind und eine untere Begrenzung 13 selbst.

## Patentansprüche

1. Minensichere Sitzeinrichtung (10) mit Rohren (2) zur Anbindung an ein Fahrzeugdach (3) oder an einen Fahrzeugboden, wobei über die Rohre (2) jeweils ein weiteres Rohr (4) als Sitzschlitten zur Sitzhöhenverstellung gestülpt ist und über jedes weitere Rohr (4) ein drittes Rohr (7) übergestülpt ist, an dem ein Sitz (1) befestigt ist, **dadurch gekennzeichnet, dass** der Sitzschlitten (4) auf der Rohraußenseite über Einkerbungen (12) für eine Raste (8) verfügt, wobei an dem, dem Sitzschlitten (4) übergestülpten dritten Rohr (7) die Raste (8) eingebunden ist, die ihrerseits vorgespannt ist, sodass mit dem Erreichen einer die Vorspannung aufhebenden Kraft, bei einem Minenvorfall bzw. einer Ansprengung, die Raste (8) entlang der Einkerbungen des Sitzschlittens (4) weiter nach unten rutscht und einen weiteren Weg frei gibt.

2. Minensichere Sitzeinrichtung (10) nach Anspruch 1, **dadurch gekennzeichnet, dass** der Sitzschlitten (4) eine Sitzhöhenverstellung über einen Arretierbolzen (5) garantiert.

3. Minensichere Sitzeinrichtung (10) nach Anspruch 1 oder 2, **dadurch gekennzeichnet, dass** der Sitzschlitten (4) auf wenigstens zwei Federn (6) gelagert ist.

4. Minensichere Sitzeinrichtung (10) nach einem der Ansprüche 1 bis 3, **dadurch gekennzeichnet, dass** das dritte Rohr (7) nach unten hin auf einer weiteren Feder (11) abgestützt ist.

5. Minensichere Sitzeinrichtung (10) nach einem der Ansprüche 1 bis 4, **dadurch gekennzeichnet, dass** die Vorspannung durch eine Feder (9) erfolgt.

6. Minensichere Sitzeinrichtung (10) nach einem der Ansprüche 1 bis 5, **dadurch gekennzeichnet, dass** der Weg durch den Bereich, in dem die Einkerbungen (12) eingebunden sind, und eine untere Begrenzung (13) selbst begrenzt wird.

## Claims

1. Mineproof seat device (10) having tubes (2) for attaching to a vehicle roof (3) or to a vehicle floor, in each case one further tube (4) being pushed over the tubes (2) as a seat carriage for seat height adjustment, and a third tube (7) being pushed over each further tube (4), to which third tube (7) a seat (1) is fastened, **characterized in that** the seat carriage (4) has notches (12) for a latch (8) on the tube outer side, the latch (8) being incorporated on the third tube (7) which is pushed over the seat carriage (4), which latch (8) is for its part prestressed, with the result that, if a force which cancels the prestress is reached, in the case of a mine incident and/or a blast, the latch (8) slides further downwards along the notches of the seat carriage (4) and enables a further travel.

2. Mineproof seat device (10) according to claim 1, **characterized in that** the seat carriage (4) guarantees a seat height adjustment via a locking pin (5).

3. Mineproof seat device (10) according to claim 1 or 2, **characterized in that** the seat carriage (4) is mounted on at least two springs (6).

4. Mineproof seat device (10) according to one of claims 1 to 3, **characterized in that** the third tube (7) is supported towards the bottom on a further spring (11).

5. Mineproof seat device (10) according to one of claims 1 to 4, **characterized in that** the prestress takes place by way of a spring (9).

6. Mineproof seat device (10) according to one of claims 1 to 5, **characterized in that** the travel is limited by way of the region, in which the notches (12) are incorporated, and a lower limiting means (13) itself.

## Revendications

1. Dispositif de siège avec sécurité anti-mines (10), comprenant des tubes (2) servant à la connexion à un toit de véhicule (3) ou à un plancher de véhicule, un tube supplémentaire (4) étant respectivement engagé sur les tubes (2), lequel fait office de glissière de siège servant au positionnement en hauteur du siège, et un troisième tube (7) étant engagé par-dessus chaque tube supplémentaire (4), auquel est fixé un siège (1), **caractérisé en ce que** la glissière de siège (4) dispose d'encoches (12) pour un cran d'arrêt (8) sur le côté extérieur du tube, le cran d'arrêt (8) étant incorporé sur le troisième tube (7), engagé par-dessus la glissière de siège (4), et étant pour sa part précontraint de telle sorte que lorsqu'une force qui annule la précontrainte est atteinte, lors d'un incident de mine ou d'une explosion, le cran d'arrêt (8) glisse davantage vers le bas le long des encoches de la glissière de siège (4) et libère une course supplémentaire.

2. Dispositif de siège avec sécurité anti-mines (10) selon la revendication 1, **caractérisé en ce que** la glissière de siège (4) garantit un positionnement en hauteur du siège par le biais d'un axe de blocage (5).

3. Dispositif de siège avec sécurité anti-mines (10) selon la revendication 1 ou 2, **caractérisé en ce que** la glissière de siège (4) est supportée sur au moins deux ressorts (6).

4. Dispositif de siège avec sécurité anti-mines (10) selon l'une des revendications 1 à 3, **caractérisé en ce que** le troisième tube (7) prend appui vers le bas sur un ressort supplémentaire (11).

5. Dispositif de siège avec sécurité anti-mines (10) selon l'une des revendications 1 à 4, **caractérisé en ce que** la précontrainte est réalisée par un ressort (9).

6. Dispositif de siège avec sécurité anti-mines (10) selon l'une des revendications 1 à 5, **caractérisé en ce que** la course est limitée par la zone dans laquelle sont incorporées les encoches (12) et une délimitation inférieure (13) elle-même.
